# EUROPEAN PATENT SPECIFICATION

(11) **EP 2 752 110 B1**
(45) Date of publication and mention of the grant of the patent: **19.08.2015**
(21) Application number: 14150071.0
(22) Date of filing: 02.01.2014
(51) Int. Cl.: A01G 5/06

(54) **Flower bucket with water-control device**
Blumentopf mit Wasserkontrolle
Pot à fleurs avec contrôle de l'eau

(30) Priority: 08.01.2013 NL 2010092
(43) Date of publication of application: 09.07.2014
(73) Proprietor: Hos, Peter Christiaan, 1544 PW Zaandijk (NL)
(72) Inventor: Hos, Peter Christiaan, 1544 PW Zaandijk (NL)
(74) Representative: EP&C

(56) References cited:
- JP-A- 2004 105 448
- US-A1- 2002 017 059

## Description

The present invention relates to a flower bucket for transporting flowers and a method for assembling a flower bucket. The flower bucket comprises an assembly of a container and a water-control device. The container has a base and an upright wall which together define an internal space. The upright wall has an inner top edge which defines an opening into the internal space. During transport of the flowers, the container is filled with a layer of water. The water-control device is attachable to the container by means of a click-fit connection. The water-control device has an insertion part with a funnel-shaped wall part for forming a water barrier. The funnel-shaped wall part serves to prevent water from spilling out of the container during transport. The insertion part can be pushed through the opening into the internal space of the container during assembly of the flower bucket.

JP2004 105448 is a Japanese patent publication relating to a flower bucket of this type. The flower bucket is designed to transport a bouquet of flowers. The known flower bucket has a container having an internal space for holding a layer of water, so that the flowers can be kept fresh during transport. The container is composed of a base, an upright wall and a flange. The flower bucket also has a water-control device which can be attached to the container in the manner of a lid. The water-control device is intended to prevent water from escaping from the container if the flower bucket falls over during transport. The water-control device has an inwardly extending funnel-shaped wall part which reaches into the internal space of the container following attachment. The funnel-shaped wall part forms a barrier for the layer of water and serves to ensure that the layer of water remains in the container if the flower bucket falls over. The flange of the container comprises a click-fit member for bringing about a click-fit connection with the water-control device. The water-control device also comprises a flange having a click-fit member. The flange of the water-control device can be placed onto the flange of the container, and the click-fit connection can then be established by exerting a pressure force.

A drawback of the known flower bucket is that the water-control device functions poorly. It is still possible for too much water to escape from the flower bucket when the flower bucket falls over during transport. As a result, the flowers in the flower bucket which has fallen over may dry out. Flowers which have dried out are often not accepted by the buyer. This results in considerable losses for the transporter.

The object of the present invention is to at least partially overcome at least one of the abovementioned drawbacks, or to provide a usable alternative. In particular, the object of the invention is to provide a flower bucket having an improved water-control device.

This object is achieved by means of a flower bucket as defined in claim 1.

According to the invention, a flower bucket is provided for transporting flowers. The flower bucket has a container for holding a layer of water. The stems of a bouquet of flowers can be inserted into the container, with it being possible for the ends of the stems to be kept in the layer of water in the container, so that the flowers stay fresh for longer. The flower bucket also has a water-control device. The water-control device is designed to keep the layer of water in the container. Water could escape from the flower bucket if it splashes around during transport or if the flower bucket falls over. The container has a base and an upright wall which define an internal space. The upright wall has a top edge which defines an opening of the internal space. The water-control device of the flower bucket is attachable to the container by means of a click-fit connection. The water-control device comprises an insertion part which can be pushed into the internal space of the container. The insertion part comprises a funnel-shaped wall part for forming a water barrier. In the assembled state of the flower bucket, the insertion part is positioned in the internal space of the container. The water barrier is provided to prevent water from spilling out of the container.

The flower bucket according to the invention provides an improvement by virtue of the fact that the upright wall of the container has a click-fit member which is positioned in an upper inner wall part of the upright wall. The insertion part of the water-control device comprises a click-fit member which is positioned on an outer wall of the insertion part. The click-fit member of the water-control device is designed to complement the click-fit member of the container in order to bring about a click-fit connection. The click-fit connection ensures that the water-control device is attached to the container.

Firstly, the attachment of the water-control device to the container of the flower bucket according to the invention is improved. The attachment is effective against forces which arise as a result of splashing water due to the positioning of the coupling members on the insertion part of the water-control device and in the upright wall of the container. This provides a connection between the water-control device and the container which is more reliable than the flange connection of the known flower bucket. The splashing of the water during transport exerts forces on the water-control device which are directed predominantly in the direction of a central axis, or longitudinal axis, of the flower bucket. In the case of the known flange connection, the water will therefore splash against the flange, as a result of which the water-control device may become detached. The click-fit connection according to the invention, on the other hand, is created by moving the click-fit members together in a direction at right angles to the direction of the force exerted by the splashing water. As the click-fit connection is directed at right angles to the direction of the force which occurs during transport, the risk of the click-fit connection becoming detached as a result is considerably reduced.

In addition, the click-fit connection in the upright wall can be configured to be sturdier than a click-fit connection in the flange, since the coupling force of the click-fit connection can be absorbed in a peripheral direction of the upright wall of the container instead of over the flat surface of a flange. As a result, it is possible to design the click-fit connection according to the invention to be relatively strong, which further reduces the risk of leaks or of the water-control device becoming detached.

In addition, the absence of a flange on the container of the flower bucket according to the invention may be advantageous during the further handling of a bouquet of flowers in the flower bucket. The flower bucket according to the invention can namely be packaged along with the bouquet of flowers when it is decoratively packaged by applying a packaging covering. The packaging covering can be clamped tight against the flower bucket according to the invention, making it possible to obtain an attractive appearance.

In an embodiment of the flower bucket according to the invention, the click-fit connection between the water-control device and the container is manually releasable. The upright wall of the container is preferably configured so as to diverge in the longitudinal direction over the entire length. As a result, the container is advantageously stackable in a nested fashion. The water-control device is also preferably configured so as to diverge in the longitudinal direction over the entire length. As a result, the water-control device is advantageously stackable in a nested fashion. The flower bucket according to the invention can advantageously be transported compactly after the water-control device and the container have been detached. The compact stackability is particularly advantageous after the flowers have been delivered to a buyer in order to return the empty flower buckets.

In an embodiment of the flower bucket according to the invention, the click-fit connection comprises at least one click-fit member which is formed by at least one ridge. In particular, the click-fit connection further comprises a complementary click-fit member which is also formed by at least one ridge. Both the click-fit member of the water-control device and the click-fit member of the container are configured in the form of at least one ridge. The at least one ridge of the water-control device engages with the at least one ridge of the container after the water-control device has been attached to the container, such that a click-fit connection is obtained. The click-fit member of the click-fit connection which is designed as a ridge can be clicked over the complementary click-fit member which is also designed as a ridge during assembly of the water-control device and the container. The complementary click-fit member preferably comprises at least two ridges, with it being possible to click the click-fit member as a ridge between the two ridges of the complementary click-fit member.

In an embodiment of the flower bucket according to the invention, the click-fit member and the complementary click-fit member are configured in the form of a groove and a ridge, respectively. The container or the water-control device can be provided with the groove, being a click-fit member. The click-fit member of the container preferably comprises a groove. The complementary click-fit member of the water-control device is then formed as a ridge. The groove preferably extends at least partially in the peripheral direction of the upright wall of the container. The groove is preferably positioned close to, in particular at a distance of at most 10 mm, more particularly at a distance of at most 5 mm, but preferably adjacent to the top edge of the upright wall of the container. The ridge preferably extends at least partially in the peripheral direction of the insertion part of the water-control device. The ridge is preferably positioned close to, in particular at a distance of at most 10 mm, more particularly at a distance of at most 5 mm, but preferably adjacent to a top edge of the water-control device. The click-fit connection between the water-control device and the container can be brought about by moving the insertion part of the water-control device into the opening of the container in order to then press the ridge of the water-control device into the groove of the container. The groove and the ridge, being click-fit members of the click-fit connection, advantageously provide a simple and effective way to ensure that the water-control device is reliably attached to the container.

In an embodiment of the flower bucket according to the invention, the ridge is formed without interruptions in the peripheral direction. The ridge is unbroken in the peripheral direction. The ridge has a continuous cross section in the longitudinal direction of the ridge along the entire peripheral direction. In an alternative embodiment of the flower bucket according to the invention, the ridge can be interrupted and comprise a plurality of ridge elements. An uninterrupted ridge along the entire periphery of the outer wall of the water-control device or the inner wall part of the container has the advantage that this reduces the risk of leaks.

In an embodiment of the flower bucket according to the invention, the click-fit member can comprise at most one ridge. In an alternative embodiment of the flower bucket according to the invention the click-fit member can comprise at least two ridges.

In an embodiment of the flower bucket according to the invention, the ridge, being a click-fit member, comprises an entry side and a locking side. The click-fit member with the entry side and the locking side is preferably formed on the outer wall of the water-control device, but in an alternative embodiment the ridge can also be provided on the inner wall part of the container. The entry side and the locking side of the ridge form a substantially triangular cross section. The entry side of the ridge comprises a bevel which is oriented obliquely with respect to the entry direction of a flower bucket for the insertion of the ridge into the groove in order to bring about the click-fit connection. The entry direction of a flower bucket is parallel to the central axis of the container. In the embodiment in which the ridge is provided on the water-control device, the entry side for assembling the water-control device and the container is oriented in a direction towards the funnel-shaped wall part of the water-control device. The locking side of the ridge on the water-control device is then oriented towards an upper part of the water-control device. In the embodiment in which the ridge is provided on the container, the entry side for assembling the water-control device and the container is oriented in a direction towards the water-control device. The locking side of the ridge on the container is then oriented towards the base of the container. After bringing about the click-fit connection, the flower bucket is in the assembled state. The locking side of the ridge comprises a surface which is positioned substantially perpendicularly with respect to the central axis of the flower bucket in order to lock the ridge in the groove after the click-fit connection has been brought about. The presence of the locking side of the ridge advantageously increases the reliability of the click-fit connection between the water-control device and the container of the flower bucket.

In an embodiment of the flower bucket according to the invention, the outer wall of the insertion part of the water-control device comprises a cylindrical sleeve surface. The cylindrical sleeve surface can be configured to be slightly conical. In the assembled state of the water-control device and container, the sleeve surface extends parallel to the upper inner wall part of the upright wall of the container. In the assembled state, the click-fit connection is brought about between the water-control device and the container. In the assembled state, the sleeve surface substantially adjoins the upper inner wall part of the upright wall of the container. In particular, the cylindrical sleeve surface has a height of at least 3 mm, more particularly at least 5 mm, but preferably at least 8 mm. The adjoining position of the sleeve surface therefore advantageously provides improved sealing of the water-control device with respect to the container.

In an embodiment of the flower bucket according to the invention, the sleeve surface of the water-control device is adjacent to the funnel-shaped wall part which forms a water barrier. This creates a ring-shaped space between the upright wall of the container and the funnel-shaped wall part in the assembled state of the water-control device and the container, the width of which ring-shaped space decreases uniformly in a tapered fashion towards the opening of the container and ends in a point. The ring-shaped space can have a circular or an angular cross section, for example a quadrangular cross section as in the case of the known flower bucket. The uniform profile of the ring-shaped space in the longitudinal direction of the flower bucket means that forces which occur as a result of splashing water are gradually absorbed. The ring-shaped space has a point and is therefore not delimited by any end face, as a result of which forces exerted by the splashing water are effectively dissipated by the funnel-shaped wall part of the water-control device and the upright wall of the container. This minimizes jerking movements caused by the water splashing against the water-control device. As a result, the seal between the water-control device and the container is further improved.

In an embodiment of the flower bucket according to the invention, the water-control device comprises a flange which is adjacent to the insertion part. In particular, the flange is adjacent to the sleeve surface on which the click-fit member is provided. During positioning of the water-control device on the container, the flange remains outside the internal space of the container. The flange can cover the top edge of the upright wall of the container. The external diameter of the flange of the water-control device is preferably greater than the diameter of the opening into the internal space of the container, such that the water-control device is prevented from falling into the internal space when attaching the water-control device to the container. The flange of the water-control device preferably extends obliquely outwards with respect to the sleeve surface of the insertion part. The flange of the water-control device preferably has an external diameter which is at least 2 cm, in particular at least 4 cm, greater than the external diameter of the sleeve surface. The flange of the water-control device can therefore be used to shape a bouquet of flowers. The flange of the water-control device can be used to attach decorative packaging for the bouquet of flowers.

The invention also relates to an auction flower bucket. The auction flower bucket comprises an injection-moulded product as a container and an injection-moulded product as a water-control device.

The invention also relates to a water-control device for a flower bucket, the water-control device having an insertion part which is provided with a click-fit member.

The invention also relates to a container for a flower bucket, with the container having an upright wall with an upper inner wall part which is provided with a click-fit member.

The invention also relates to a method for assembling a flower bucket according to the invention by coupling a container to a water-control device. The method comprises the step of inserting an insertion part of the water-control device into an opening of the container in order to bring about a click-fit connection between a click-fit member on the insertion part of the water-control device and a complementary click-fit member on the upright wall of the container.

The invention will be explained in further detail with reference to the attached drawings. The drawings show a practical embodiment of the invention and should not be regarded as being limiting.

Specific detailed features can also be seen as being characteristic of the invention in a general sense, separately from the exemplary embodiment. In the drawings:
Fig. 1A shows a perspective view of the flower bucket according to the invention;
Fig. 1B shows a cross-sectional view of the flower bucket as shown in Fig. 1A;
Fig. 2 shows a cross-sectional view of a container of the flower bucket according to the invention;
Figs 3A and 3B show cross-sectional views of two variants of a water-control device for a flower bucket according to the invention;
Fig. 4 shows a cross-sectional view of a flower bucket having a water-control device as shown in Fig. 3B;
Figs 5A-5C show cross-sectional detail views of various embodiments of complementary click-fit members for a flower bucket according to the invention.

In the figures, identical reference numerals are used to denote similar parts. In order to facilitate an understanding of the description and the claims, the words 'vertical, horizontal, radial, longitudinal, transverse, axial and central' are used with reference to gravity and said words should be interpreted as technically functional and not limiting to the scope of protection.

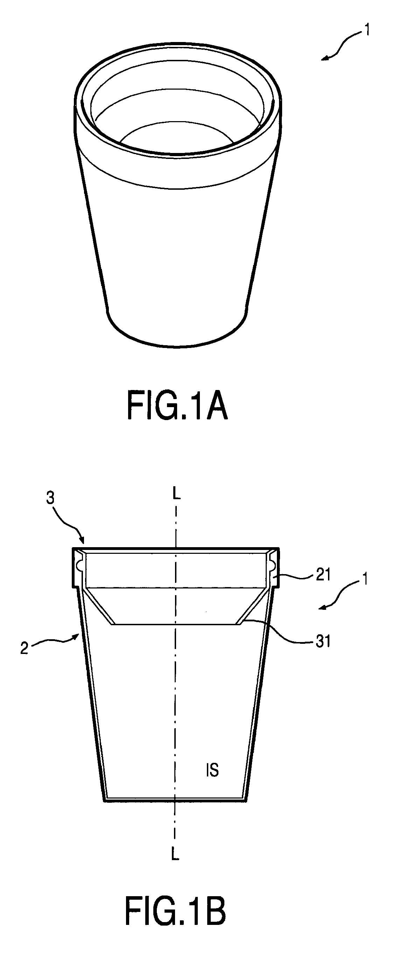

Fig. 1A shows the flower bucket 1 according to the invention in a perspective view. The flower bucket 1, also referred to as a bouquet holder, is showed obliquely from above in an upright position. The flower bucket 1 is designed to keep a bouquet of flowers fresh during transport. The flower bucket is a typical auction flower bucket, with the auction flower bucket being used to hold a bouquet of flowers in the flower bucket in order to transport the bouquet to the auction itself and from a flower auction to a florist. The auction flower bucket is configured as a plastic injection-moulded product. The auction flower bucket is manufactured as a disposable article. A layer of water can be held in the flower bucket. There is a risk of the flower bucket falling over during transport, as a result of which the flower bucket may be in a substantially horizontal position and water may escape from the container. However, the flower bucket is provided with a water-control device. The water-control device of the flower bucket 1 is provided to ensure that water remains in the container despite the water splashing or the flower bucket falling over, so that the flowers in the flower bucket do not dry out and so that they stay fresh for longer.

Fig. 1B shows a cross-sectional view of the flower bucket 1 according to the invention. The flower bucket 1 is composed of two components, namely a container 2 and a water-control device 3. The water-control device 3 can be attached to the container 2 of the flower bucket 1 in such a way that it can be manually released. Loose containers 2 and loose water-control devices 3 can be stacked in a nested fashion in such a way that they can be removed again. That is advantageous for the return transport of empty flower buckets.

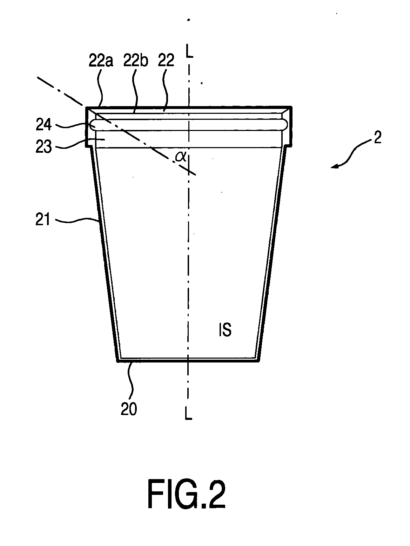

The container 2 is shown separately in Fig. 2. Fig. 2 shows a cross-sectional view of the container of the flower bucket according to the invention. The flower bucket 1 comprises a container 2 for holding a bouquet of flowers in a layer of water. The container 2 is an injection-moulded product. The container is made of polypropylene. The container is made in one piece.

The container 2 has a base 20 and an upright wall 21. The upright wall 21 extends from the base 20. The base 20 and the upright wall 21 define an internal space IS of the container. The internal space IS of the container has a volume of one to three litres, as is typical for an auction flower bucket. A layer of water several centimetres deep can be held in the internal space IS. The container is cylindrical. The container 2 has a height which is greater than its diameter. The container 2 is rotationally symmetrical. The upright wall has a circular cross section. The container 2 has a central axis which defines a longitudinal axis L-L.

The container has a base 20 and an upright wall 21 having a substantially constant thickness. The upright wall is configured to be slightly conical, with the upright wall 21 becoming wider in a direction away from the base 20. The upright wall 21 diverges from the base to an outer top edge 22a. A plurality of containers 2 can therefore be stacked in a nested fashion. The top edge 22a of the container 2 is without a mounting flange extending radially outwards.

An inner top edge 22b of the upright wall 21 forms an opening for receiving flowers in the container. The inner top edge 22b delimits the internal space IS. The inner and the outer top edge 22a, 22b delimit a ring-shaped top surface 22 having a width which is substantially identical to the thickness of the upright wall 21. The top surface 22 is preferably at an angle α of at most 90° and at least 45° with respect to the longitudinal axis L-L.

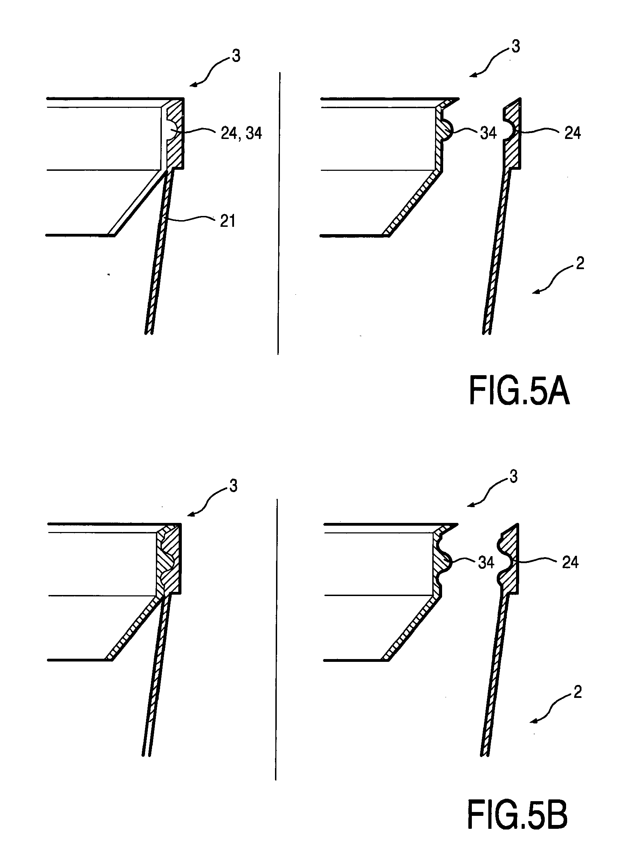

The opening into the internal space IS which is formed by the inner top edge 22b has a diameter which is greater than the external diameter of the base. The upright wall 21 has an upper inner wall part 23 which is situated on the inside. The upper inner wall part is a part of the inside wall of the upright wall in the internal space IS which is adjacent to the inner top edge 22b. The inner wall part 23 is situated in the internal space IS. The upper inner wall part 23 extends in a direction from the inner top edge 22b to the base 20 of the container 2. The upper inner wall part 23 extends over a length of at most 3 cm, in particular at most 2 cm, but preferably over a length of at most 1 cm. For illustration purposes, the part of the upright wall 21 at the location of the upper inner wall part 23 is shown with a thickened portion. However, in connection with the injection-moulding process, it is preferable to also configure this part of the upright wall 21 to have the same thickness as the rest of the upright wall. Preferably, the upright wall 21 has a substantially constant thickness over its entirety, including over the length of the upper inner wall part. This essentially means that it is possible to apply variations in thickness which are caused by production tolerances of the container. The upper inner wall part 23 comprises a click-fit member 24. The click-fit member 24 is positioned in the upper inner wall part 23. The click-fit member 24 is situated in the internal space IS of the container 2. The click-fit member is in the form of a groove 24. The groove 24 extends in the peripheral direction of the upright wall 21. The groove 24 is preferably adjacent to the inner top edge 22b. The groove 24 is at a distance of from at least 0.05 mm to at most 1 mm from the inner top edge 22b, in such a way that a flexible ridge is formed which can engage over a ridge on an outer wall of a water-control device. This makes it possible to obtain an improved seal. The groove 24 has a circular cross section in Fig. 2. Figs 5A-5C elaborate on various embodiments of the click-fit member 24 in more detail.

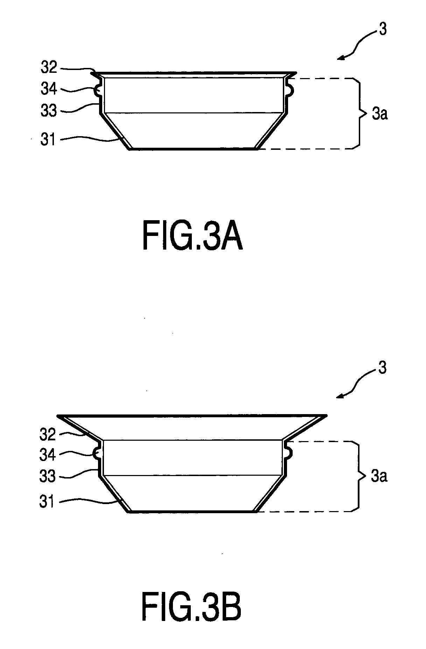

Figs 3A and 3B show the water-control device 3 in cross-sectional views in further detail. The water-control device 3 is made in one piece. The water-control device 3 is an injection-moulded product. The water-control device 3 has a substantially constant wall thickness. The water-control device 3 is made of polypropylene. The water-control device 3 comprises a passage for stems of a bouquet of flowers to pass through. The passage is formed by a single centrally positioned continuous hole.

Fig. 1B shows the flower bucket 1 in an assembled state with a water-control device 3 as shown in Fig. 3A, with the water-control device 3 being clicked together with the container 2. As shown in Fig. 1B, the water-control device 3 has an upper part which is situated above an upright wall 21 of the container 2 when the flower bucket 1 is in the assembled state and a lower part which extends along the upright wall 21 into an internal space IS of the container 2 when the flower bucket 1 is in the assembled state. The lower part of the water-control device 3 which extends past the opening of the internal space IS formed by the inner top edge 22b of the container when the flower bucket 1 is in the assembled state is an insertion part 3a of the water-control device 3. The insertion part 3a of the water-control device comprises a funnel-shaped wall part 31 for forming a water barrier. The funnel-shaped wall part 31 has a closed surface in a peripheral direction in order to hold back the water. The funnel-shaped wall part 31 converges. The funnel-shaped wall part forms a narrowing in the passage. The funnel-shaped wall part 31 is conical. The funnel-shaped wall part 31 is adjacent to a wall part 33 of the insertion part 3a. The wall part 33 is in a central region of the water-control device 3. As shown in Fig. 1B, the wall part 33 in the central region of the water-control device is at least partially formed so as to complement the upper wall part of the container 2. The wall part 33 in the central region is substantially cylindrical. An outer wall of the wall part 33 of the water-control device forms a cylindrical sleeve surface. The cylindrical sleeve surface has a substantially constant diameter over its height. In the assembled state of the flower bucket 1, the cylindrical sleeve surface adjoins the inner wall of the container 2.

The insertion part 3a of the water-control device 3 is provided with a click-fit member 34 in order to bring about a click-fit connection with the container 2. The click-fit member 34 is formed so as to complement the click-fit member 24 of the container. As illustrated, the click-fit member 34 comprises a ridge which can be clicked into the groove 24 of the container 2. The ridge extends in the peripheral direction of the water-control device. Different designs of the click-fit members are also possible, as illustrated in Figs 5A-5C.

The upper part of the water-control device comprises a flange 32. The water-control device 3, as shown in Fig. 3A, has in the upper part a flange having an external diameter which is substantially identical to the diameter of the outer top edge 22a of the container 2, but which is greater than the inner top edge 22b of the container. As a result it is possible to prevent the water-control device 3 from being pushed too far into the container during assembly of the flower bucket 1.

The water-control device 3 as shown in Fig. 3B has a flange 32 which is extended with respect to the flange 32 of the water-control device 3 as shown in Fig. 3A. The extended flange 32 has a flange length of at least 5 mm.

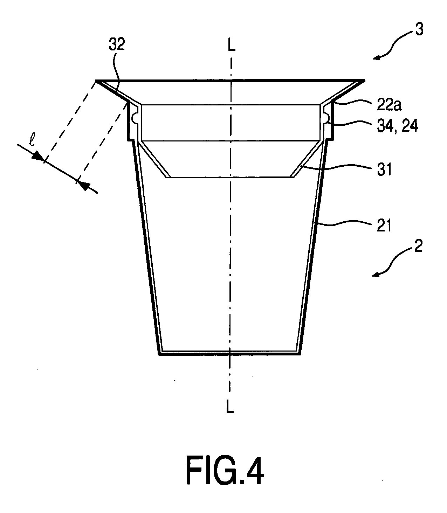

Fig. 4 shows an assembly of a container 2, as shown in Fig. 2, and a water-control device 3, as shown in Fig. 3B. In the assembled state of the flower bucket 1, the extended flange 32 extends in a radial direction along an outer surface of the flange over a distance ℓ of at least 10 mm, in particular at least 15 mm, but preferably at least 20 mm with respect to the outer top edge 22a. The extended flange 32 advantageously provides a supporting surface for applying a decorative material, such as a film, leaf or stalk material, etc.

Figs 5A-5C show various cross-sectional detail views of a click-fit member 24 with a complementary click-fit member 34 for forming a click-fit connection between the water-control device 3 and the container 2. In the left-hand view, the click-fit connection is closed. In the right-hand view, the click-fit members are shown separately in order to illustrate the design.

In Fig. 5A, the click-fit member 34 of the water-control device 3 is designed as a ridge. The ridge extends in the peripheral direction of the water-control device. The ridge can be continuous. In that case, the ridge has a constant cross section in the peripheral direction. In an alternative embodiment, the ridge can be interrupted and comprise at least two ridge elements. The complementary click-fit member of the container 2 is formed as a groove. The groove extends in the peripheral direction of the container 2. The groove is formed so as to complement the ridge in cross section.

Fig. 5B shows a cross-sectional detail view of an alternative embodiment of a click-fit member 24 with a complementary click-fit member 34 for forming a click-fit connection. The click-fit member 34 of the water-control device 3 is formed as a ridge, with either side of the ridge being provided with a groove. The click-fit member 24 of the container 2 is formed as a groove, with the groove comprising a ridge on either side. The ridge of the water-control device 3 can be positioned between the ridges of the container 2 in order to bring about a click-fit connection.

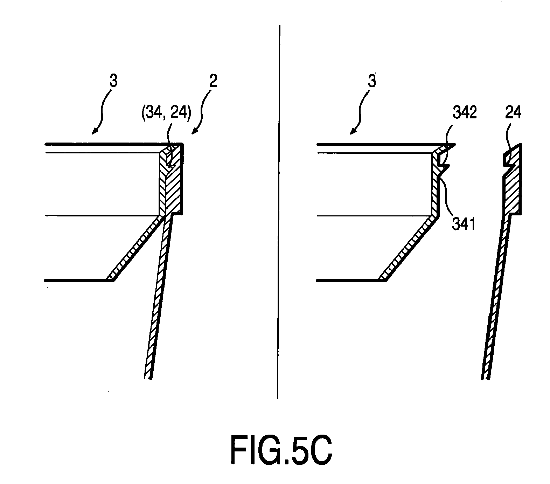

Fig. 5C shows a cross-sectional detail view of an alternative embodiment of a click-fit member with a complementary click-fit member for forming a click-fit connection. The click-fit member 34 of the water-control device 3 is a ridge having a triangular cross section. The click-fit member 24 of the container 2 is a groove 24 which has a complementary triangular cross section. The ridge 34 of the water-control device 3 has an entry side 341 and a locking side 342. The entry side 341 comprises a bevel with respect to a central axis of the water-control device 3 for insertion of the ridge 34 of the water-control device into the groove 24 of the container 2 in order to bring about the click-fit connection between the water-control device 3 and the container 2. A direction parallel to the central axis of the water-control device 3 in a direction towards the internal space IS of the container 2 is an entry direction of the water-control device 3 into the container 2 for assembling the flower bucket 1. The locking side 342 of the ridge comprises a surface which is substantially at right angles with respect to the entry direction in order to lock the ridge 34 in the groove 24 after the click-fit connection has been brought about. The groove 24 in the container 2 comprises a complementary locking groove side which interacts with the locking side of the ridge in order to provide a locking effect after bringing about the click-fit connection between the water-control device 3 and the container 2. The locking side of the ridge 34 and the complementary locking groove side of the groove 24 block a movement of the water-control device 3 in a direction of the container 2 following engagement of the ridge 34 in the groove 24. This makes it possible to prevent the water-control device 3 from becoming detached due to water splashing in the container 2.

Many variants are possible in addition to the embodiments shown in the figures. In a variant of the illustrated embodiment of the ridge on the water-control device and the groove on the container, in an alternative embodiment of the flower bucket the ridge may be provided on the container and the groove on the water-control device.

It should be noted that measures according to the invention and in particular measures referred to in the dependent claims are considered as being patentable in their own right and separately from measures referred to in other independent or dependent claims. These measures may, for example, be the subject of divisional patent applications, with these measures being defined independently of the measures currently included in the independent claims or other dependent claims. This applies in particular to the abovementioned measure, wherein the upper part of the water-control device is provided with a flange which extends obliquely outwards with respect to the insertion part of the water-control device in order to prevent the water-control device from being pushed too far into the container.

The invention is disclosed with reference to embodiments of the flower bucket according to the invention. Reference is expressly made to the fact that, after reading the description, a person skilled in the art may wish to make changes or adaptations that are possible from a technical viewpoint, but that said changes or adaptations do not fall outside the scope of protection of the invention as defined in the attached claims. The person skilled in the art must understand that it is possible to make various adaptations from a technical viewpoint and to replace elements with equivalents without thereby departing from the essence of the invention. It is in particular possible to make changes, which fall within the definition according to the attached claims, with respect to the illustrated embodiments which do not depart from the essence of the invention and thus remain within the teaching of the invention. The invention is therefore not restricted to the illustrated and described embodiments, but the scope of protection of the invention will cover all embodiments which fall within the definition of the attached claims.

## Claims

1. Flower bucket (1) for transporting flowers, wherein the flower bucket (1) comprises an assembly of a container (2) for holding a layer of water and a water-control device (3) which is designed to keep the layer of water in the container (2), wherein the container (2) comprises a base (20) and an upright wall (21) which define an internal space (IS), wherein the upright wall (21) has an inner top edge (22b) which defines an opening into the internal space (IS), wherein said water-control device (3) is attachable to said container (2) by means of a click-fit connection, wherein said water-control device comprises an insertion part (3a) having a funnel-shaped wall part (31) for forming a water barrier, which insertion part (3a) can be pushed through the opening into the internal space (IS) of the container (2), **characterized in that** the upright wall (21) of the container (2) comprises a click-fit member (24) which is positioned in an upper inner wall part (23) of the upright wall (21), wherein the insertion part (3a) of the water-control device (3) comprises a click-fit member (34) which is positioned on an outer wall (33) of the insertion part (3a), wherein the click-fit member (34) of the water-control device (3) is designed to complement the click-fit member (24) of the container (2) in order to bring about said click-fit connection.

2. Flower bucket (1) according to claim 1, wherein the click-fit member (24, 34) is formed by at least one ridge.

3. Flower bucket (1) according to claim 1 or 2, wherein the click-fit member (24) and the complementary click-fit member (34) are formed by a groove and a ridge.

4. Flower bucket (1) according to claim 2 or 3, wherein the ridge (34) has an entry side (341) and a locking side (342), wherein the entry side (341) comprises a bevel with respect to an entry direction for the insertion of the ridge (34) into the groove (24) in order to bring about the click-fit connection and wherein the locking side (342) comprises a surface which is substantially at right angles with respect to the entry direction in order to lock the ridge (34) in the groove (24) after the click-fit connection has been brought about.

5. Flower bucket (1) according to one of the preceding claims, wherein the outer wall of the insertion part (3a) of the water-control device (3) comprises a wall part (33) which, when the water-control device (3) and the container (2) are in an assembled state, extends parallel to the upper inner wall part (23) of the upright wall (21) of the container (2).

6. Flower bucket (1) according to claim 5, wherein the funnel-shaped wall part (31) is adjacent to the wall part (33) of the insertion part, in such a way that a ring-shaped space which tapers to a point is formed between the funnel-shaped wall part (31) of the water-control device (3) and the upright wall (21) of the container (2).

7. Flower bucket (1) according to one of the preceding claims, wherein the water-control device (3) has a flange (32) which is adjacent to the insertion part (3a).

8. Flower bucket (1) according to claim 7, wherein the flange (32) of the water-control device (3) extends obliquely outwards with respect to the insertion part (3a) and has a flange length of at least 5 mm.

9. Flower bucket (1) according to one of the preceding claims, wherein the flower bucket is designed as an auction flower bucket.

10. Water-control device (3) for a flower bucket (1) according to one of claims 1-9, wherein the water-control device (3) has an insertion part (3a) having an outer wall which is provided with a click-fit member (34) in order to bring about a click-fit connection with a container (2).

11. Container (2) for a flower bucket (1) according to one of claims 1-9, wherein the container (2) has an upright wall (21) with an upper inner wall part (23) which is provided with a click-fit member (24) in order to bring about a click-fit connection with a water-control device (3).

12. Method for assembling a flower bucket (1) according to one of claims 1-9, wherein the method comprises the step of inserting an insertion part (3a) of a water-control device (3) into an opening of a container (2) in order to bring about a click-fit connection between a click-fit member (34) on the insertion part (3a) of the water-control device (3) and a click-fit member (24) on the upright wall (21) of the container (2).

13. Method according to claim 12, wherein the method comprises the step of transporting flowers in the flower bucket (1).

## Patentansprüche

1. Blumenbehälter (1) zum Transportieren von Blumen, wobei der Blumenbehälter (1) eine Anordnung aus einem Behälter (2), um eine Wasserschicht zu halten, und aus einer Wassersteuerungs-Vorrichtung (3), welche entworfen ist, um die Wasserschicht in dem Behälter (2) zu halten, umfasst, wobei der Behälter (2) einen Boden (20) und eine aufrecht stehende Wand (21), welche einen Innenraum (IS) definieren, umfasst, wobei die aufrecht stehende Wand (21) eine innere obere Kante (22b) aufweist, welche eine Öffnung in dem Innenraum (IS) definiert, wobei die Wassersteuerungs-Vorrichtung (3) an den Behälter (2) mittels einer Anklick-Verbindung anbringbar ist, wobei die Wassersteuerungs-Vorrichtung ein Einführungsteil (3a) umfasst, welches ein trichterförmiges Wandteil (31) aufweist, um eine Wassersperre auszubilden, wobei das Einführungsteil (3a) durch die Öffnung in den Innenraum (IS) des Behälters (2) gedrückt werden kann, **dadurch gekennzeichnet, dass** die aufrecht stehende Wand (21) des Behälters (2) ein Anklick-Teil (24) umfasst, welches in einem oberen Innenwandteil (23) der aufrecht stehenden Wand (21) angeordnet ist, wobei das Einführungsteil (3a) der Wassersteuerungs-Vorrichtung (3) ein Anklick-Teil (34) umfasst, welches auf einer Außenwand (33) des Einführungsteils (3a) angeordnet ist, wobei das Anklick-Teil (34) der Wassersteuerungs-Vorrichtung (3) entworfen ist, um das Anklick-Teil (24) des Behälters (2) zu komplementieren, um die Anklick-Verbindung zu bewirken.

2. Blumenbehälter (1) nach Anspruch 1, wobei das Anklick-Teil (24, 34) durch mindestens eine Rippe ausgebildet ist.

3. Blumenbehälter (1) nach Anspruch 1 oder 2, wobei das Anklick-Teil (24) und das komplementäre Anklick-Teil (34) durch eine Vertiefung und eine Rippe ausgebildet sind.

4. Blumenbehälter (1) nach Anspruch 2 oder 3, wobei die Rippe (34) eine Eingangsseite (141) und eine Verriegelungsseite (342) aufweist, wobei die Eingangsseite (341) eine Fase bezüglich einer Eingangsrichtung für die Einführung der Rippe (34) in die Vertiefung (24) umfasst, um die Anklick-Verbindung zu bewirken, und wobei die Verriegelungsseite (342) eine Fläche umfasst, welche im Wesentlichen rechte Winkel bezüglich der Eingangsrichtung aufweist, um die Rippe (34) in der Vertiefung (24) zu verriegeln, nachdem die Anklick-Verbindung bewirkt worden ist.

5. Blumenbehälter (1) nach einem der vorhergehenden Ansprüche, wobei die Außenwand des Einführungsteils (3a) der Wassersteuerungs-Vorrichtung (3) ein Wandteil (33) umfasst, welches sich, wenn sich die Wassersteuerungs-Vorrichtung (3) und der Behälter (2) in einem zusammengebauten Zustand befinden, parallel zu dem oberen Innenwandteil (23) der aufrecht stehenden Wand (21) des Behälters (2) erstreckt.

6. Blumenbehälter (1) nach Anspruch 5, wobei sich das trichterförmige Wandteil (31) benachbart zu dem Wandteil (33) des Einführungsteils befindet, so dass ein ringförmiger Raum, welcher sich zu einem Punkt verjüngt, zwischen dem trichterförmigen Wandteil (31) der Wassersteuerungs-Vorrichtung (3) und der aufrecht stehenden Wand (21) des Behälters (2) ausgebildet ist.

7. Blumenbehälter (1) nach einem der vorhergehenden Ansprüche, wobei die Wassersteuerungs-Vorrichtung (3) einen Flansch (32) aufweist, welcher benachbart zu dem Einführungsteil (3a) angeordnet ist.

8. Blumenbehälter (1) nach Anspruch 7, wobei sich der Flansch (32) der Wassersteuerungs-Vorrichtung (3) schräg nach außen bezüglich des Einführungsteils (3a) erstreckt und eine Flanschlänge von mindestens 5 mm aufweist.

9. Blumenbehälter (1) nach einem der vorhergehenden Ansprüche, wobei der Blumenbehälter als ein Auktions-Blumenbehälter entworfen ist

10. Wassersteuerungs-Vorrichtung (3) für einen Blumenbehälter (1) nach einem der Ansprüche 1-9, wobei die Wassersteuerungs-Vorrichtung (3) ein Einführungsteil (3a) mit einer Außenwand aufweist, welche mit einem Anklick-Teil (34) versehen ist, um eine Anklick-Verbindung mit einem Behälter (2) zu bewirken.

11. Behälter (2) für einen Blumenbehälter (1) nach einem der Ansprüche 1-9, wobei der Behälter (2) eine aufrecht stehende Wand (21) mit einem oberen Innenwandteil (23) aufweist, welches mit einem Anklick-Teil (24) versehen ist, um eine Anklick-Verbindung mit einer Wassersteuerungs-Vorrichtung (3) zu bewirken.

12. Verfahren zum Zusammenbauen eines Blumenbehälters (1) nach einem der Ansprüche 1-9, wobei das Verfahren den Schritt eines Einführens eines Einführungsteils (3a) einer Wassersteuerungs-Vorrichtung (3) in eine Öffnung eines Behälters (2) umfasst, um eine Anklick-Verbindung zwischen einem Anklick-Teil (34) auf dem Einführungsteil (3a) der Wassersteuerungs-Vorrichtung (3) und einem Anklick-Teil (24) auf der aufrecht stehenden Wand (21) des Behälters (2) zu bewirken.

13. Verfahren nach Anspruch 12, wobei das Verfahren den Schritt eines Transportierens von Blumen in dem Blumenbehälter (1) umfasst.

## Revendications

1. Pot de fleurs (1) pour transporter des fleurs, dans lequel le pot de fleurs (1) comprend un ensemble composé d'un récipient (2) pour contenir une couche d'eau et d'un dispositif de contrôle d'eau (3) qui est conçu pour maintenir la couche d'eau dans le récipient (2), dans lequel le récipient (2) comprend une base (20) et une paroi droite (21) qui définissent un espace interne (IS), dans lequel la paroi droite (21) a un bord supérieur interne (22b) qui définit une ouverture dans l'espace interne (IS), dans lequel ledit dispositif de contrôle d'eau (3) peut être fixé audit récipient (2) au moyen d'un raccordement encliquetable, dans lequel ledit dispositif de contrôle d'eau comprend une partie d'insertion (3a) ayant une partie de paroi en forme d'entonnoir (31) pour former une barrière d'eau, laquelle partie d'insertion (3a) peut être poussée à travers l'ouverture dans l'espace interne (IS) du récipient (2), **caractérisé en ce que** la paroi droite (21) du récipient (2) comprend un élément encliquetable (24) qui est positionné dans une partie de paroi interne supérieure (23) de la paroi droite (21), dans lequel la partie d'insertion (3a) du dispositif de contrôle d'eau (3) comprend un élément encliquetable (34) qui est positionné sur une paroi externe (33) de la partie d'insertion (3a), dans lequel l'élément encliquetable (34) du dispositif de contrôle d'eau (3) est conçu pour compléter l'élément encliquetable (24) du récipient (2) afin de provoquer ledit raccordement encliquetable.

2. Pot de fleurs (1) selon la revendication 1, dans lequel l'élément encliquetable (24, 34) est formé par au moins une partie en saillie.

3. Pot de fleurs (1) selon la revendication 1 ou 2, dans lequel l'élément encliquetable (24) et l'élément encliquetable (34) complémentaire sont formés par une rainure et une partie en saillie.

4. Pot de fleurs (1) selon la revendication 2 ou 3, dans lequel la partie en saillie (34) a un côté d'entrée (341) et un côté de verrouillage (342), dans lequel le côté d'entrée (341) comprend un biseau par rapport à une direction d'entrée pour l'insertion de la partie en saillie (34) dans la rainure (24) afin de provoquer le raccordement encliquetable et dans lequel le côté de verrouillage (342) comprend une surface qui est sensiblement en angle droit par rapport à la direction d'entrée afin de verrouiller la partie en saillie (34) dans la rainure (24) après que le raccordement encliquetable a été provoqué.

5. Pot de fleurs (1) selon l'une des revendications précédentes, dans lequel la paroi externe de la partie d'insertion (3a) du dispositif de contrôle d'eau (3) comprend une partie de paroi (33) qui, lorsque le dispositif de contrôle d'eau (3) et le récipient (2) sont dans un état assemblé, s'étend parallèlement à la partie de paroi interne supérieure (23) de la paroi droite (21) du récipient (2).

6. Pot de fleurs (1) selon la revendication 5, dans lequel la partie de paroi en forme d'entonnoir (31) est adjacente à la partie de paroi (33) de la partie d'insertion, de sorte qu'un espace de forme annulaire qui se rétrécit progressivement jusqu'à un point, est formé entre la partie de paroi en forme d'entonnoir (31) du dispositif de contrôle d'eau (3) et la paroi droite (21) du récipient (2).

7. Pot de fleurs (1) selon l'une des revendications précédentes, dans lequel le dispositif de contrôle d'eau (3) a un rebord (32) qui est adjacent à la partie d'insertion (3a).

8. Pot de fleurs (1) selon la revendication 7, dans lequel le rebord (32) du dispositif de contrôle d'eau (3) s'étend obliquement vers l'extérieur par rapport à la partie d'insertion (3a) et a une longueur de rebord d'au moins 5 mm.

9. Pot de fleurs (1) selon l'une des revendications précédentes, dans lequel le pot de fleurs est conçu comme un pot de fleurs d'enchères.

10. Dispositif de contrôle d'eau (3) pour un pot de fleurs (1) selon l'une des revendications 1 à 9, dans lequel le dispositif de contrôle d'eau (3) a une partie d'insertion (3a) ayant une paroi externe qui est prévue avec un élément encliquetable (34) afin de provoquer un raccordement encliquetable avec un récipient (2).

11. Récipient (2) pour un pot de fleurs (1) selon l'une des revendications 1 à 9, dans lequel le récipient (2) a une paroi droite (21) avec une partie de paroi interne supérieure (23) qui est prévue avec un élément encliquetable (24) afin de provoquer un raccordement encliquetable avec un dispositif de contrôle d'eau (3).

12. Procédé pour assembler un pot de fleurs (1) selon l'une des revendications 1 à 9, dans lequel le procédé comprend l'étape consistant à insérer une partie d'insertion (3a) d'un dispositif de contrôle d'eau (3) dans une ouverture d'un récipient (2) afin de provoquer un raccordement encliquetable entre un élément encliquetable (34) sur la partie d'insertion (3a) du dispositif de contrôle d'eau (3) et un élément encliquetable (24) sur la paroi droite (21) du récipient (2).

13. Procédé selon la revendication 12, dans lequel le procédé comprend l'étape consistant à transporter des fleurs dans le pot de fleurs (1).
